(19) Europäisches Patentamt / European Patent Office / Office européen des brevets

(11) **EP 3 505 399 A1**

(12) **EUROPEAN PATENT APPLICATION**

(43) Date of publication:
**03.07.2019  Bulletin 2019/27**

(51) Int Cl.:
**B60R 1/04** *(2006.01)*          **B60R 1/08** *(2006.01)*
**B60R 1/12** *(2006.01)*

(21) Application number: **19150045.3**

(22) Date of filing: **02.01.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.01.2018   US 201862612896 P
28.12.2018   US 201816235215**

(71) Applicant: **Visteon Global Technologies, Inc.
Van Buren Township, MI 48111-5711 (US)**

(72) Inventors:
• **WEINDORF, Paul Frederick Luther
Van Buren Township, MI 48111 (US)**
• **HAYDEN, Brian John
Van Buren Township, MI 48111 (US)**
• **PFAU, Douglas Allen
Van Buren Township, MI 48111 (US)**

(74) Representative: **MERH-IP Matias Erny Reichl
Hoffmann
Patentanwälte PartG mbB
Paul-Heyse-Strasse 29
80336 München (DE)**

(54) **REARVIEW DISPLAY SYSTEM WITH ADJUSTMENT MECHANISM**

(57)     A rear display system includes a display device disposed in a housing to generate an image on a projection surface. A mirror element is disposed proximate the display device and a lens is disposed proximate the mirror element. A tilt mechanism for adjustably positioning the mirror element relative to the display device between a first position and at least one second position includes a mountPing assembly having at least one arm receiving and engaging one or more portions of the mirror element, a biasing element positioned between the mirror element and the mounting assembly and an adjustment apparatus having an indexing device configured to adjustably position the mirror element between the first position and the at least one second position relative to the display device.

Fig-3

EP 3 505 399 A1

**Description**

CROSS REFERENCE TO RELATED APPLICATIONS

This application claims the benefit of U.S. Provisional Patent Application No. 62/612,896, filed on January 2, 2018, and entitled "Electronic Mirror with a Tilt Mechanism," which is incorporated by reference in its entirety in this disclosure.

TECHNICAL FIELD

Embodiments described herein generally relate to a rearview display system for displaying an image, and more particularly to a rearview display system for reducing ghost images during the display of an image.

BACKGROUND

Electronic displays are provided in many contexts to electronically render digital information to a viewer. The electronic displays receive information and renders the information through lighted cells in patterns that reflect the texts and pictures employed to convey the information. In the vehicular space, information has traditionally been conveyed via mechanical elements, such as gauges, lights, and rotating digits. Mechanical displays have been replaced with electronic displays in both the instrument cluster area, and the space traditionally behind the steering wheel and embedded in a dashboard, and the infotainment area.

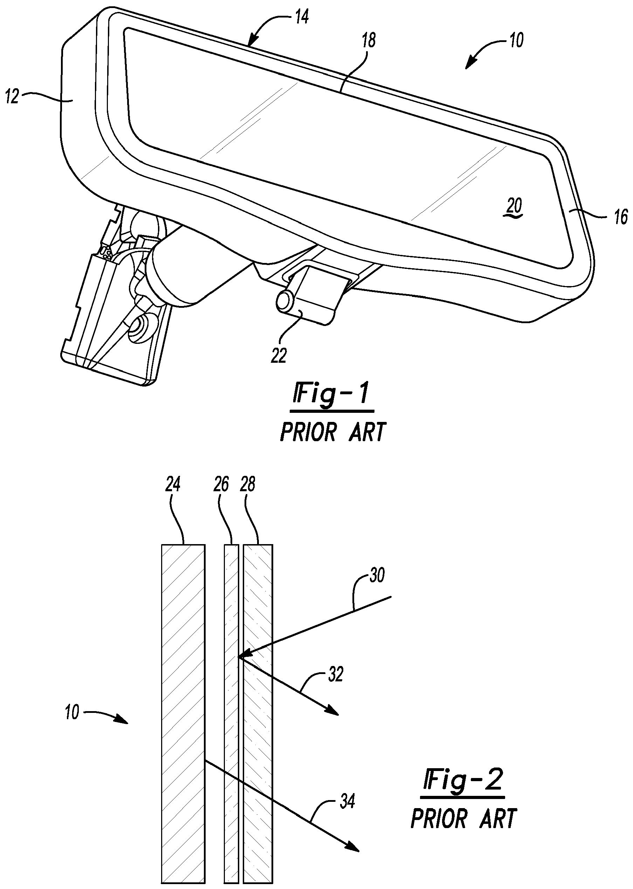

Electronic-mirrors or e-mirrors have been developed to convey information in a vehicle. An electronic mirror is a display device that allows content to be viewable in the reflective state and to be a mirror in the display state. Figure 1 illustrates an electronic mirror or e-mirror 10 according to one prior art implementation. A rear cover 12 is provided and serves as a housing 14 for the mirror 10. The housing 14 may cooperate with a front bezel 16 having an opening 18 sized to receive a lens 20. The lens 20 may be adjusted between a reflective state and a display state by a toggle switch 22.

Certain electronic mirrors are implemented with the toggle switch to allow the electronic mirror to be oriented towards a headliner of a vehicle during display mode. However, even with this toggle switch, several problems may be introduced due to the existence of ghost imaging, as will be explained below.

Figure 2 illustrates a side-view of the prior art electronic mirror 10 as described in Figure 1. As shown, a display 24 cooperates with a mirror element 26, which is disposed proximate an electrochromic absorber 28. Illumination 30 from a source element, such as headlights from a vehicle rearward of the mirror, may be projected through the electrochromic absorber 28 toward the mirror element 26. The mirror element 26 may reflect about 50% of the light 32 to allow 50% transmission of content from the display 24 to be seen. The mirror element 26 may introduce a phenomenon known as ghost images, due to the mirror element 26 allowing 50% transmission of light 34 from display 24 (to allow content from the display to be seen), while also allowing the electronic mirror to maintain reflective properties.

Thus, because of the ghost image phenomenon shown in Figure 2, the user sees the reflected image of the headliner or the roof overlaid on the display video image. Since the video image and reflected image are at different focal planes, the user may experience eye fatigue and may have difficulties focusing on the display image. Even with directing the mirror towards the headliner, problems occur when the reflected image includes a sunroof since the electrochromic optical element transmission cannot be reduced in order to maximize display transmission.

SUMMARY

A rearview display system includes a housing and a display device disposed in the housing. The display device is configured to generate an image on a projection surface of the display device. A mirror element is disposed proximate the display device and includes a semi-transparent reflective surface. A lens is disposed proximate the mirror element. The display device and lens are positioned in the housing in a generally coplanar configuration.

A tilt mechanism for adjustably positioning the mirror element relative to the display device between a first position and at least one second position includes a mounting assembly having at least one arm receiving and engaging one or more portions of the mirror element. A biasing element is positioned between the mirror element and the mounting assembly. The tilt mechanism additionally includes an adjustment apparatus having an indexing device configured to adjustably position the mirror element an incremental rate between the first position and the at least one second position relative to the display device.

The adjustment apparatus includes a switch and an actuation member cooperating with the switch. The actuation member engages the mirror element in response to activation of the switch and cooperates with the indexing device to adjustably position the mirror element between the first position and the at least one second position relative to the display device.

A mirror retainer receives and secures the mirror element. The mirror element includes a first portion extending from the mirror retainer adjacent a central axis of the mirror retainer and an opposing second portion extending from the mirror retainer. The mounting assembly of the tilt mechanism includes a first arm engaging the first portion of the mirror retainer and a second arm engaging the second portion of the mirror retainer.

In one or more embodiments of the disclosure, the mounting assembly includes a first dampening element cooperating with the first arm of the mounting assembly and the first portion of the mirror retainer and a second dampening element cooperating with the second arm of the mounting assembly and the second portion of the mirror retainer to reduce vibrations of the mirror element when supported by the mounting assembly and mirror retainer. The mirror element includes a semi-transparent reflective surface that can be one of a semi-transparent mirror or a semi-transparent reflective polarizing layer.

The indexing device of the adjustment apparatus may include a cam rotatably mounted to the indexing device and a plurality of stops provided in the cam corresponding to angular adjustment positions to define the incremental rate of travel of the mirror element relative to the display device to control the positioning of the mirror element. A locking member extending from the mirror retainer releasably engages the plurality of stops in the cam.

One or more projections may extend from the cam. The actuation member engages the mirror retainer and one or more of the projections in response to activation of the switch to disengage the locking member from one of the plurality of stops and rotate the cam to adjustably position the mirror element an incremental rate between the first position and the at least one second position relative to the display device. The cam of the indexing device may additionally include a first plurality of stops sized to releasably secure the locking member extending from the mirror retainer and a second plurality of stops sized to releasably engage a spring-loaded locking pin.

The indexing device of the adjustment apparatus may also include a gear having one or more channels corresponding to an incremental rate for angular adjustment to control the positioning of the mirror element relative to the display device and a locking pin extending from the mirror retainer. A spring-loaded pin cooperates with the gear to position the gear relative to the indexing device. The one or more channels of the gear may be sized to releasably secure the locking pin extending from the mirror retainer and adjustably position the mirror element an incremental rate between the first position and the at least one second position relative to the display device.

The indexing device of the adjustment apparatus may also include an electric motor and a gear box cooperating with the electric motor. A portion of the gear box engages a portion of the mirror retainer. The motor engages the gear box to adjust the position of the mirror retainer to adjustably position the mirror element an incremental rate between the first position and the at least one second position relative to the display device.

The indexing device of the adjustment apparatus may also include a body and a pair of stops provided in the body. A locking member having a spring-loaded projection may be configured to releasably engage the pair of stops. The pair of stops are aligned on the body to adjustably position the mirror element an incremental rate between the first position and the at least one second position relative to the display device.

The above features and advantages and other features and advantages of the present disclosure are readily apparent from the following detailed description of the best modes for carrying out the disclosure when taken in connection with the accompanying drawings.

BRIEF DESCRIPTION OF THE DRAWINGS

FIGURE 1 is a perspective view of a prior art electronic mirror;

FIGURE 2 is an exploded side view of the prior art electronic mirror of FIGURE 1;

FIGURE 3 is an exploded perspective view of a rearview display system in accordance with one or more embodiments of the disclosure;

FIGURE 4A is a rear elevational view of the rearview display system in accordance with one or more embodiments of the disclosure;

FIGURE 4B is a side elevational view of the rearview display system in accordance with one or more embodiments of the disclosure;

FIGURE 5 is a schematic diagram of the rearview display system illustrating an alignment of one or more components of the rearview display system in accordance with one or more embodiments of the disclosure;

FIGURE 6 is an illustration showing a source image light ray propagated through an optical element and reflected off a reflective polarizer in accordance with one or more embodiments of the disclosure;

FIGURE 7 is a schematic diagram of the rearview display system illustrating a first alignment of one or more components of the rearview display system in accordance with one or more embodiments of the disclosure;

FIGURE 8 is a schematic diagram of the rearview display system illustrating a second alignment of one or more components of the rearview display system in accordance with one or more embodiments of the disclosure;

FIGURE 9 is a side elevational view of a tilt mechanism for use in the rearview display system with an adjustment apparatus in accordance with one or more embodiments of the disclosure;

FIGURE 10 is a side elevational view of a tilt mechanism for use in the display system with another adjustment apparatus in accordance with one or more embodiments of the disclosure;

FIGURE 11 is a side elevational view of a tilt mechanism for use in the display system with yet another adjustment apparatus in accordance with one or more embodiments of the disclosure; and

FIGURE 12 is a side elevational view of a tilt mechanism for use in the display system with another adjustment apparatus in accordance with one or more embodiments of the disclosure.

DETAILED DESCRIPTION

The invention is described more fully hereinafter with references to the accompanying drawings, in which one or more embodiments of the invention are shown. This invention may, however, be embodied in many different forms and should not be construed as limited to the embodiments set forth herein. Rather, these one or more embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

Those having ordinary skill in the art will recognize that terms such as "above," "below," "upward," "downward," "top," "bottom," "forward," "rearward," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

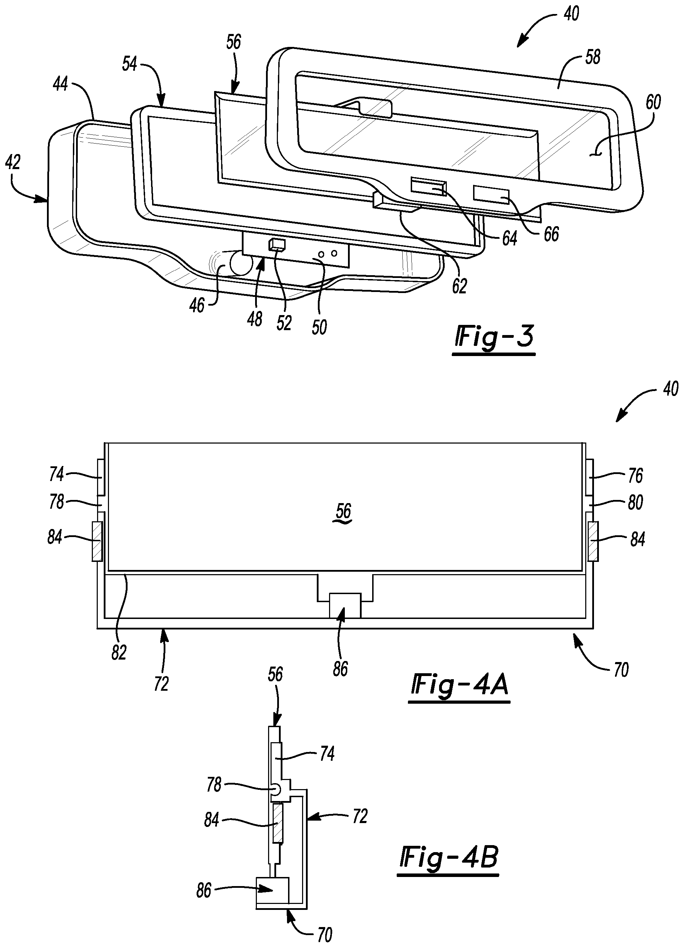

Referring to the Figures, wherein like numerals indicate like parts throughout the several views, Figure 3 illustrates a display system 40. The display system 40 may be a rearview display system in the form of an electronic mirror or e-mirror. Alternatively, the display system 40 in accordance with one or more embodiments of the disclosure may comprise another type of display system, such as an instrument cluster, heads-up display or the like.

The rearview display system 40 shown in Figure 3 is an electronic mirror 42 for use in the interior of a motor vehicle. The electronic mirror 42 may be positioned adjacent a forward portion of a vehicle interior (not shown). For example, in one or more embodiments, the electronic mirror 42 of the rearview display system 40 may additionally be positioned on or proximate a windshield or windscreen (not shown) of the vehicle. However, it is understood that the electronic mirror 42 or other form of rearview display system could be implemented in other regions of the vehicle, such as dashboard, console or other interior space and positioned on or proximate a structural portion of the vehicle, including, but not limited to, a vehicle panel or headliner, vehicle roof surface or vehicle frame to accomplish the objectives of this disclosure.

The electronic mirror 42 includes a housing 44 that may cooperate with one or more positioning elements 46 to mount the electronic mirror 42 to a portion of the vehicle interior (not shown). The housing 44 of the electronic mirror 42 may receive and support one or more components of the electronic mirror 42. The one or more components of the electronic mirror 42 of the rearview display system 40 may include a controller 48 incorporating components, such as printed circuit board (PCB) 50 and a switch 52 mounted thereon in electrical communication with the PCB 50. The switch 52 may be coupled to or configured to receive a mechanical or electrical stimulus that causes the electronic mirror 42 to adjust between one or more display modes, such as from a reflective state or a mirror mode to a display state or video mode, through the adjustment of one or more components of the rearview display system 40.

The electronic mirror 42 of the rearview display system 40 includes a projection device or display device 54 disposed within the housing 44. The display device 54 may be any sort of device capable of generating or configured to generate an image or digitally render information to present to a viewer for display on a projection surface. For example, in one or more embodiments, the display device 54 may include a backlight and a projection or display surface. The display device 54 may be a light emitting display, such as an organic light emitting diode (OLED) display, liquid crystal display (LCD) a thin-film transistor (TFT) display or other suitable display for the presentation of information. The backlight sources light to the projection surface, which, using technology such as liquid crystal cell-based technology, determines a pattern to illuminate and make viewable to the viewer of the display device 54.

An optical viewing layer or mirror element 56 is disposed proximate the display device 54. The mirror element 56 may be adjustable relative to the display device 54 and include a semi-transparent reflective surface. The semi-transparent reflective surface of the mirror element may be one of a semi-transparent mirror or a semi-transparent reflective polarizing layer. For example, the mirror element 56 may include a partially reflective surface that provides a mirror surface to reflect images from the rear of the vehicle when the display device 54 is inactive. The mirror element 56 may additionally incorporate a partially transparent surface that allows information or content generated on the display device 54 to be viewed by a viewer through the mirror element 56.

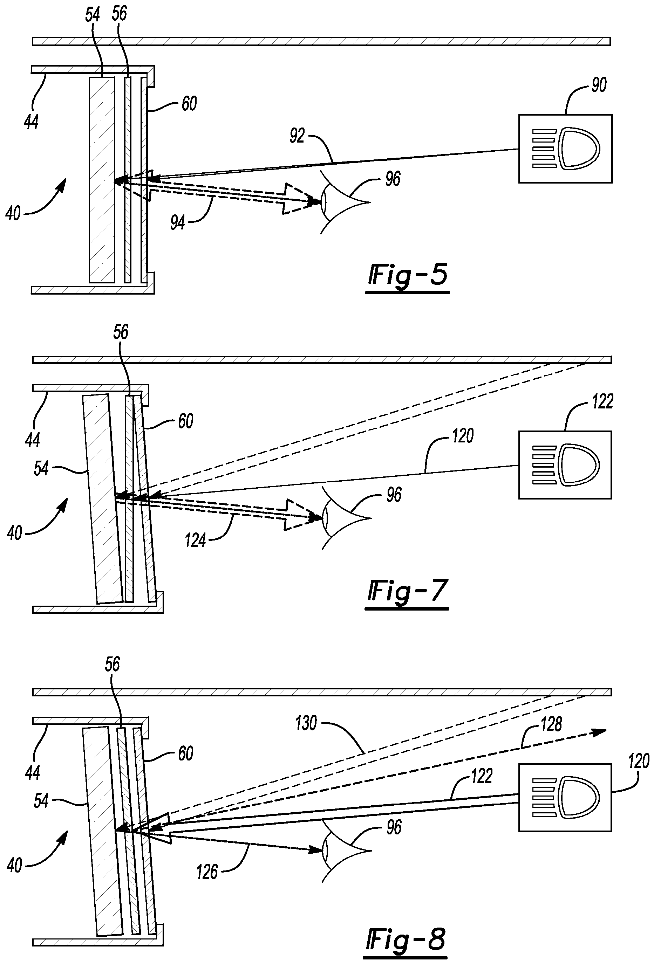

The housing 44 of the electronic mirror 42 may further include a cover surface or bezel 58 at least partially enclosing one or more of the controller 48, display device 54 and mirror element 56 of the electronic mirror 42. Bezel 58 may be configured to face a viewer of the rearview display system 40 and is sized to at least partially receive and cooperate with a lens 60. The lens 60 is disposed proximate the mirror element 56 and is generally transparent to allow images generated by the display device 54 or images reflected by the mirror element 56 to be viewed by the viewer, generally referenced by reference number 96 in Figure 5.

A button or switch 62 cooperates with the mirror element 56 and extends through an aperture 64 in the bezel 58. In one or more of the embodiments, the switch 62 additionally may cooperate with the switch 52 o adjust the one or more components of the rearview display system 40, such as adjustment of the mirror element 56 from the first position to the at least one second position. At least one sensor 66 may also be provided in the bezel 58. The at least one sensor 66 may include a rear facing sensor, shown as reference numeral 66 in the Figures, and may further include a front facing sensor (not shown). The at least one sensor 66 may record ambient lighting conditions and cooperate with the controller 48 to adjust the luminance settings of the display device 54 or the mirror reflectance of the mirror element 56.

Referring additionally now to Figures 4A and 4B, the one or more embodiments of the rearview display system 40 disclosed herein includes a component adjustment mechanism or tilt mechanism, generally referenced by numeral 70, to adjustably position at least one component of the rearview display system 40. A retainer or mounting assembly 72 of the tilt mechanism 70 includes at least one arm 74 to receive and engage a portion of the mirror element 56. It is contemplated that the mounting assembly 72 may be configured to engage the mirror element 56 and move the mirror element 56 relative to the display device, or, in the alternative, engage the display device and move the display device relative to the mirror element 56.

As shown in Figure 4A, the mounting assembly 72 includes a first arm 74 engaging a first portion 78 of the mirror element 56 and an opposing second arm 76 engaging a second portion 80 of the mirror element 56. Alternatively, a mirror support or mirror retainer 82 that cooperates with the at least one arm 74 may receive and secure the mirror element 56. At least one dampening element or damper 84 may cooperate with the at least one arm 74 and one or more portions 78 of the mirror element to reduce vibrations or oscillating movements of the mirror element 56 when supported by the mounting assembly 72.

For example, a first dampening element may cooperate with the first arm of the mounting assembly and the first portion of the mirror retainer while a second dampening element cooperating with the second arm of the mounting assembly and the second portion of the mirror retainer. One or more embodiments of the tilt mechanism 70 of the rearview display system 40 may incorporate an adjustment apparatus, generally referenced by numeral 86, to adjustably position the mirror element 56 relative to the display device between a first position and at least one second position.

Referring now to Figure 5, the one or more components of the rearview display system 40 are illustrated in an alignment wherein the one or more of the components arranged in a general parallel configuration or common plane. As illustrated in Figure 5, the display device 54, mirror element 56 and lens 60 are each arranged in a configuration wherein each of the display device 54, mirror element 56 and lens 60 are generally vertical relative to the housing 44 and parallel with respect to each of the other components. Illumination from a source element, generally referenced by numeral 90, such as headlights from a vehicle rearward of the mirror, enters the rearview display system 40 as shown generally by line and arrow 92. The illumination 92 is reflected by the mirror element 56, as shown by line and arrow 94, to be viewed by the viewer 96.

This arrangement of the one or more components of the rearview display system 40 may generate ghost images, or residual reflected images, when the illumination 92 is reflected by the mirror element 56 that may affect images generated by the display device 54. For example, headlights from a vehicle driving behind the vehicle containing the rearview display system 40 can create a glare or ghost image in the mirror element 56 for the occupant of the vehicle.

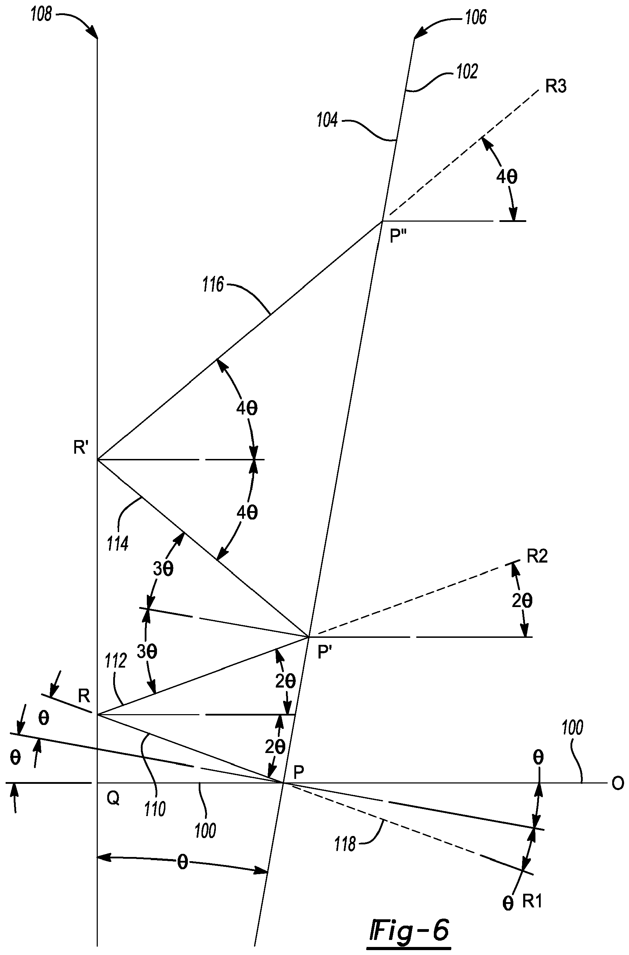

Referring now to Figure 6, an illustration showing a source image light ray propagated through an optical element and reflected off a reflective polarizer. Reflected rays may represent reflected light that may cause ghost images. Figure 6 illustrates an angle analysis and an approximation of how the non-coplanarity angle affects what a viewer sees. As can be seen in Figure 6, illumination from an incident ray of light, generally referenced by numeral 100, strikes a front surface 102 of the angled or non-coplanar glass 106. Due to the air to glass index of refraction mismatch, about 8% (front and rear surface at point P) of the light is reflected at an angle of $2\theta$ (or 2 "theta") relative to the incident ray where $\theta$ (or "theta") is the angle the glass 106 is rotated with respect to the mirror surface 108. The virtual image appears to come from the opposite direction.

The primary ray 100 that passes through the front surface 102 of glass 106 reflects off of the mirror surface 108 and strikes the back surface 104 of the angled glass 106 at point P. The reflection component, generally referenced by numeral 110, returns back to the mirror surface 108 at point R at an angle of 2θ with respect to mirror normal. The ray, now referenced by numeral 112, is reflected to point P' where it exits to the viewer (not shown) at point R2 at an angle of 2θ relative to mirror normal. The reflection component, referenced by numeral 114, at point P' travels point to R'. The reflection component, referenced by numeral 116, exits at point P" with an angle of 4θ relative to mirror normal, where it exits to the view at point R3.

The "bottom" reflected ray, or the reflected ray angle illustrated below the primary ray 100, generally referenced by numeral 118, is an angle of 2θ with respect to the reflective polarizer normal vector, with θ being the tilt angle of the glass 106. The "top" rays, 110, 112, 114, 116 are caused by reflections from the back surface 104 of the active polarizer element or glass 106 and occur at angles of n(2θ) where n is an integer value starting from 1. The number of reflection ray angles including the primary desired reflection ray may be described according to the equation:

$$\frac{\sum^{\infty} n(2\theta)}{n = .1, 0, 1, 2, 3 \ldots}.$$

The amount of coplanarity needed to avoid the deleterious effects of reflection of light rays on what the viewer sees may be adjusted as the tilt angle is changed from 1° to 0.01° with the values of 1°, 0.5°, 0.2°, 0.1°, and 0.01°. As the tilt angle reduces in size, the distance between potential ghost images is reduced accordingly to where the ghost images are shown as one.

The following example is provided to illustrate the amount of coplanarity needed to avoid the deleterious effects shown above. Certain assumptions are made with regards to light sources, size of the light source, and distance from the light source. These assumptions are provided as an example.

Assuming a headlight size of 6" (152.4 mm), the field of view (FOV) angle subtended by the headlight at a distance of 1 mile (1609.3 meters) is given by the equation:

$$FOV_{Degrees} = 2\left(\frac{180}{\pi}\right) ATAN \left(\frac{\left(\frac{6"}{12"}\right)}{2}\right) = 0005426°$$

For a 10% offset, the offset distance is 0.1x152.4mm is equal to 15.24mm resulting in 0.000271° of deviation by the equation:

$$Dev_{Degrees} = \left(\frac{180}{\pi}\right) ATAN \left(\frac{15.24mm}{1609.3m \, x \, 1000\frac{mm}{m}}\right)$$

$$Dev_{Degrees} = 0.000271°$$

For a 50mm high display the deviation in height is shown by the equation:

$$Dev_{\mu m} = \frac{um}{mm} x \, 50mm \, TAN \left(\left(\frac{\pi}{180}\right) 0.000271°\right)$$

$$Dev_{\mu m} = 0.2367 \mu m$$

A deviation of only 0.2367μm is a very small number to maintain coplanarity.

In addition to the coplanarity of the mirror elements consisting of the lens 60 and mirror element 56, a second challenge is matrix scatter from the display device 54 behind the mirror element 56. Matrix scatter is described as a star pattern emanating from the specular distinct image, and often there will be different colors visible because of the diffraction pattern generating matrix scatter. Therefore, reflected matrix scatter causes the light component, which is passed through a mirror element 56, to not be effectively absorbed as a beam stop by a display device 54, which is reflected back towards the viewer. Since the matrix scatter is caused by structures (e.g. row and column lines) internal to the display device 54, external anti-reflection counter measures are not be effective for this reflection component.

An additional challenge with the coplanar construction, is that when a video mode is enabled, and the mirror element 56 reflection is reduced to the minimum level, there is still a reflection component due to the fact that the optical mirror elements introduce imperfections in reflectance. This reflectance may range from about 6% to 12% depending on the optical construction. This small reflection component will reflect an image of car headlights that will not be aligned to the camera image and therefore will confuse the viewer (i.e. there will be two sets of car headlights for every car).

Referring now to Figures 7 and 8, a solution to eliminate the matrix scatter is to tilt the display device 54 and lens 60 relative to the mirror element 56. As an example, as the tilt angle is increased where the top of the display device 54 is angled away from the mirror element 56, the matrix scatter reflection component is visually separated downwards from the mirror reflection component. If the tilt angle is increased sufficiently, the matrix scatter will no longer be visible in the field of view for the mirror element 56 when adjusted for viewing out of the rear window.

For example, in the first position shown in Figure 7, the one or more components are positioned in a "mirror mode." In the first position or mirror mode, the display device 54 and lens 60 are tilted or angled relative to the housing 44 and positioned in a coplanar arrangement. The mirror element 56 is generally positioned perpendicular to the housing and positioned at an angle relative to the display device 54 and lens 60.

As shown in Figure 7, in the mirror mode the mirror element 56 is rotated to the vertical position, whereas the display device 54 and lens 60 are positioned at an angle of about 4° (4 degrees) from the generally vertical or normal plane of the mirror element 56. When the mirror element 56 is placed in this first position, or generally reflective state, such that the display device 54 is not viewable through the mirror element 56 by the viewer 96. The mirror element 56 is oriented to allow a viewer 96 to view illumination, generally referenced by numeral 120, from a light source 122, that is reflected, referenced by numeral 124, off the mirror element 56 to the viewer 96.

In this mirror mode, the viewer 96 sees the illumination 120 or headlight reflection from the mirror element 56 but does not see the headlight reflection components from the lens 60 or from the display device 54. Therefore, no ghost images will be visible. In one or more of the embodiments, a rotator cell (not shown) of the mirror element 56 may have reflective polarizers laminated to both sides of the mirror element 56 while the active polarizer cell (not shown) may be either laminated on the rotator cell on the lens 60. Since coplanarity would be required to laminate the active polarizer to the rotator cell, it may be preferred to laminate the active polarizer cell to the lens 60 or the glass rotator cell may become the front lens.

In the at least one second position shown in Figure 8, the one or more components are positioned in a "video mode." In the at least one second position or video mode, the display device 54 and lens 60 are tilted relative to the housing 44 and positioned in a coplanar arrangement, wherein each of the display device 54, mirror element 56 and lens 60 are positioned at an angle of about 4° (4 degrees) from the generally vertical or normal plane, as illustrated in Figure 8. However, it is understood that the mirror element 56 may be positioned at a tilt angle between a mirror normal position as shown in Figure 7 and the coplanar arrangement in Figure 8, or be moved in another direction with respect to the housing 44.

The mirror element 56 is placed in the at least one second position or a semi-transparent state, thereby allowing information or content on the display device 54 to be presented or viewed through the mirror element 56 by the viewer 96 as represented by arrow and reference numeral 126. The semi-transparent reflective surface of the mirror element 56 may be one of a semi-transparent mirror or a semi-transparent reflective polarizing layer. The viewer 96 will not see the illumination 120 from the source 122 in the mirror element 56, thereby ensuring no ghost images will be visible.

As shown in the video mode in Figure 8, in the camera video mode the reflectance of the mirror element 56 and active polarizer elements is reduced to the minimum value. The mirror element 56 is rotated such that it is essentially parallel to the display device 54 and lens 60. Due to the rotation, none of the reflected light 120 from the headlight or light source 122 is in the field of view, as represented by arrow and reference numeral 128, for the viewer 96. The viewer 96 only sees only the display and the small amount of reflection from the headliner, represented by reference numeral and arrow 130. It is understood that headliners generally are formed with a non-reflective covering or material, which reduces the deleterious effects associated with reflection or glare from this surface.

Since the viewer 96 does not see any of the headlight reflection components, an anti-reflective film (AR) may no longer be needed on the front or back of the lens 60 or on the display device 54. However, the use of AR on the lens may improve the reflectance of the mirror element 56 by approximately 8% and eliminate the ghost image of the headliner that the viewer 96 may see under daytime operating conditions.

AR coatings like motheye films are not required on the mirror element56 and in fact it is desirable not to use AR in order to obtain and additional 6% of specular reflectance from the mirror element 56. Thus, if the mirror element 56 serves as the front lens, no optical lamination is required with the exception of laminating reflective polarizers on the second optical mirror element and laminating or depositing AR on the front and rear sides of the first mirror optical element.

Referring now to Figures 4A-4B and Figures 9-12, the adjustment apparatus 86 for use in conjunction with the tilt mechanism 70 of the rearview display system 40 is described in greater detail. The mounting assembly 72 of the tilt mechanism 70 includes at least one arm 74 configured to receive and engage a portion of the mirror element 56. It is contemplated that the mounting assembly 72 may be configured to engage the mirror element 56 and move the mirror element 56 relative to the display device.

In one or more embodiments, the mirror element 56 may be secured to a mirror support or mirror retainer 82. Mirror retainer 82 includes a first portion 78 extending from the mirror retainer 82 and an opposing second portion 80 extending from the mirror retainer 82. It is contemplated that the first portion 78 and second portion 80 of the mirror retainer 82 may be disposed about a central axis of the mirror retainer 82. The first arm 74 of the mounting assembly 72 releasably engages the first portion 78 of the mirror retainer 82 while the second arm 76 of the mounting assembly 72 releasably engages a second portion 80 of the mirror retainer 82.

As shown in Figure 4B and Figures 9-12, each of the first arm 74 and second arm (not shown) may include a semi-circular or arcuate shaped guide or track 88. The semi-circular shaped track 88 is sized to receive and secure the first portion 78 and second portion 80 of the mirror retainer 82 therein. Further, the semi-circular shaped track 88 guides the first portion 78 and second portion 80 of the mirror retainer 82 to allow the mirror retainer 82 to pivot about the central axis of the mirror retainer 82 relative to the first arm 74 and second arm 76 of the mounting assembly 72.

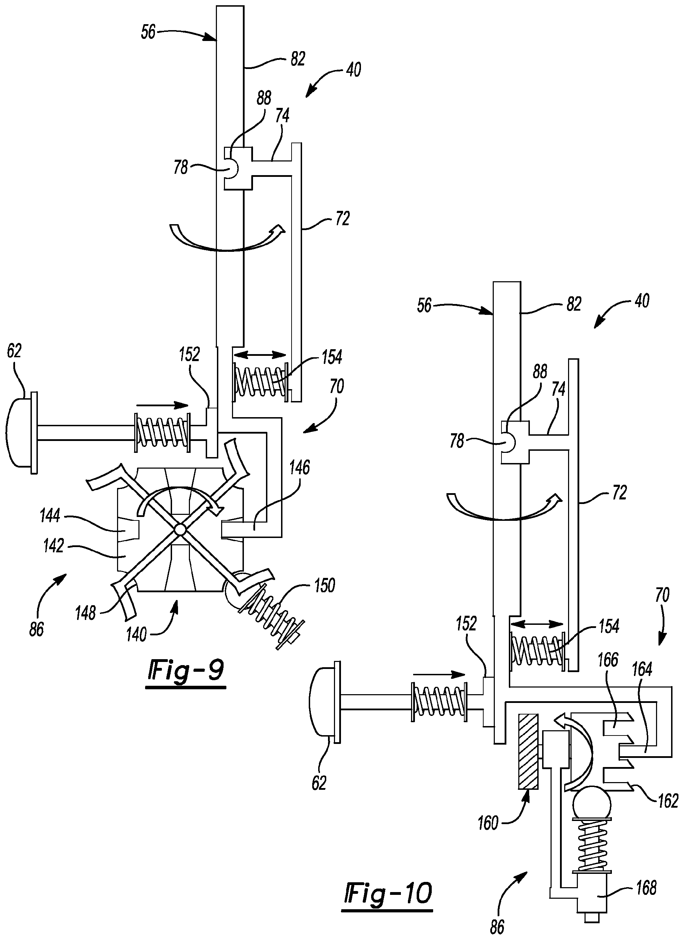

Referring to Figure 9, one or more embodiments of the adjustment apparatus 86 of the tilt mechanism 70 are disclosed. Adjustment apparatus 86 may incorporate an indexing device, generally referenced by numeral 140. Indexing device 140 may be configured adjust the mirror element 56 at an incremental rate between the first position or mirror mode illustrated in Figure 7 to the at least one second position or video mode illustrated in Figure 8.

A rotatably mounted cam 142 is disposed in the indexing device 140. The cam 142 may include a plurality of stops 144 that correspond to angular adjustment positions defining the incremental rate of travel of the mirror element 56 relative to the display device to control the positioning of the mirror element 56. The plurality of stops 144 may include a first plurality of stops 144 sized to releasably secure a locking member 146 extending from the mirror retainer 82 and a second plurality of stops 148 sized to releasably engage a spring-loaded locking pin 150. Alternatively, the indexing device 140 may include an arrangement wherein the cam 142 includes only a first plurality of stops 144 to engage the locking member 146 extending from the mirror retainer 82 or wherein the cam 142 includes only a second plurality of stops 148 sized to releasably engage a spring-loaded locking pin 150 to accomplish the objectives of the disclosure.

In one or more embodiments of the disclosure, the incremental rate of adjustment of the mirror element is one cycle of rotation of the cam 142, which constitutes a four-degree angle change of the mirror element 56 relative to the housing 44 of the rearview display system 40. As shown in Figure 9, a mechanical spring-loaded or solenoid switch 62 includes an actuation member 152. A spring or biasing element 154 extends between a portion of the mirror retainer 82 and a portion of the mounting assembly 72.

Activation or actuation of the switch 62 translates the actuation member 152 to move from an inactive position, wherein the actuation member 152 does not engage the mirror retainer 82 to an active position, wherein the actuation member 152 engages a portion of the mirror retainer 82. The actuation member 152 additionally engages and moves one or more projections 156 extending from the cam 142, causing the cam 142 to rotate. Upon engagement of the actuation member 152 with a portion of the mirror retainer 82 and one or more projections 156 of cam 142, the mirror retainer 82 rotates about the central axis of the mirror retainer 82 and the semi-circular tracks 88 in the first arm 74 and second arm 76 of the mounting assembly 72.

Rotation of the mirror retainer 82 about the mounting assembly 72 causes the locking member 146 of the cam 142 to disengage from one of the first plurality of stops 144. Rotation of the cam 142 cause the spring-loaded locking pin 150 to disengage from one of the second plurality of stops 148. In response, the mirror retainer 82 is incrementally adjusted about one degree of rotation or travel between the positions, such as between the first position and at least one second position, relative to the display device.

Biasing element 154 cooperates with the mirror retainer 82 and the mounting assembly 72 to position the mirror element 56 for use with the rearview display system 40. In response, the spring loaded biasing element moves the mirror retainer 82 and mirror element 56 from the active position to the inactive position, thereby positioning the locking member 146 into engagement one of the first plurality of stops 144 and the locking pin 150 to engage a corresponding one of the second plurality of stops 148. It is contemplated that feedback systems may be employed to ensure that a controller 48 or microprocessor in communication with the indexing device 140 of the adjustment apparatus 86 knows the selected indexing setting for device 140.

Referring now to Figure 10, an alternative arrangement for the adjustment apparatus 86 of the tilt mechanism 70 is disclosed. Adjustment apparatus 86 may incorporate an indexing device, generally referenced by numeral 160. Indexing device 160 may be configured to allow controlled adjustment of the mirror element 56 from the first position or mirror mode illustrated in Figure 7 to the at least one second position or video mode illustrated in Figure 8.

The indexing device 160 may include a transverse rotating mechanical system including a gear 162 cooperating with a locking pin 164 extending from a portion of the mirror retainer 82. The gear 162 may include one or more channels 166 that correspond to an incremental rate for angular adjustment to control the positioning of the mirror element 56 relative to the display device. The one or more channels 166 are sized to releasably secure the locking pin 164 extending from the mirror retainer 82. In one or more embodiments of the disclosure, the range of channels in the gear constitutes a four-degree angle change of the mirror element 56 relative to the housing 44 of the rearview display system 40.

As with the arrangement shown in Figure 9, the indexing device in Figure 10 includes a mechanical spring-loaded switch or solenoid switch 62 having an actuation member 152. The mirror retainer 82 includes a biasing element 154 extending between a portion of the mirror retainer 82 and a portion of the mounting assembly 72. The biasing element 154 biases the mirror retainer 82 and mirror element 56 into position for use with the rearview display system 40. Activation or actuation of the switch 62 translates the actuation member 152 to move from an inactive position adjacent a portion of the mirror retainer 82 to an active position such that the actuation member 152 engages the mirror retainer 82.

Upon engagement, the mirror retainer 82 rotates about the central axis of the mirror retainer 82 and the semi-circular tracks 88 in the first arm 74 and second arm 76 of the mounting assembly 72. Rotation of the mirror retainer 82 about the mounting assembly 72 thereby causes the locking pin 164 to translate out of one of the one or more channels 166. Biasing element 154 will bias the locking pin 164 of the mirror retainer 82 into engagement with into an adjacent channel 166. A spring-loaded pin 168 may cooperate with the gear 162 to position the gear 162 relative to the indexing device 160 and return the gear 162 to an inactive state when disengaged by the switch 62.

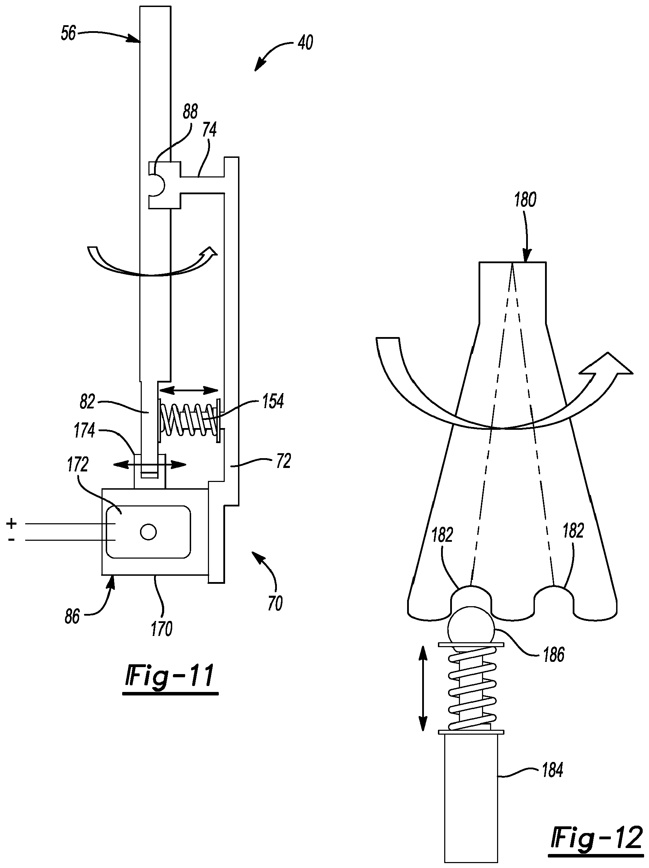

Referring now to Figure 11, yet another alternative arrangement for the adjustment apparatus 86 of the tilt mechanism 70. Adjustment apparatus 86 may incorporate an indexing device, generally referenced by numeral 170. Indexing device 170 may be configured to allow controlled adjustment of the mirror element 56 from the first position or mirror mode illustrated in Figure 7 to the at least one second position or video mode illustrated in Figure 8.

The indexing device 170 may include an electric motor 172, such as a stepper motor or the like. The motor 172 may cooperate with or include a gear box 174. The gear box 174 includes one or more settings or gears corresponding to an incremental rate for angular adjustment of the mirror element 56 to control the positioning of the mirror element 56 relative to the display device. A portion of the gear box 174 engages a portion of the mirror retainer 82. The mirror retainer 82 includes a biasing element 154 extending between a portion of the mirror retainer 82 and a portion of the mounting assembly 72. The biasing element 154 biases the mirror retainer 82 and mirror element 56 into position for use with the rearview display system 40.

The adjustment apparatus 86 may include an activation switch (not shown) in electrical communication with the motor 172. Upon actuation of the switch, the stepper motor 172 engages the gear box 174 to adjust the position of the mirror retainer 82. The mirror retainer 82 rotates about the central axis of the mirror retainer 82 and the semi-circular tracks 88 in the first arm 74 and second arm (not shown) of the mounting assembly 72. Biasing element 154 will bias the locking pin 164 of the mirror retainer 82 into engagement with into an adjacent channel 166.

It is contemplated that one or more of the embodiments disclosed herein may be in communication with a controller or other control device to allow for the automatic adjustment of the mirror element 56 from the first position to the at least one second position relative to the display device. In one non-limiting embodiment, a controller (not shown) may be in electrical communication with the at least one sensor 66, such as the rear facing sensor, shown as reference numeral 66 in the Figures. The at least one sensor 66 may record ambient lighting conditions and cooperate with the controller to adjust the luminance settings of the display device 54 or the mirror reflectance of the mirror element 56 by instructing the electric motor 172 of the indexing device 170 to adjust the position of the mirror retainer 82. It is also contemplated that the controller may be implemented with the alternative adjustment apparatus disclosed herein.

Figure 12 illustrates another alternative arrangement for the adjustment apparatus 86 of the tilt mechanism 70. Adjustment apparatus 86 may incorporate an indexing device, generally referenced by numeral 180. The indexing device 180 is a damping mechanism that may be used in connection with the adjustment apparatus 86. The damping mechanism may a body having a pair of slots or stops 182 sized to releasably engage a locking member 184. The locking member 184 may include a spring-loaded projection 186 to secure the damping mechanism in position.

It is contemplated that the pair of stops 182 are aligned on the body of the damping mechanism to adjustably position the mirror element 56 an incremental rate between the first position and the at least one second position relative to the display device. The stops 182 position the mirror element 56 either at the first position or mirror mode shown in Figure 7, wherein the mirror element 56 is positioned generally perpendicular to the housing 40 and at an angle to the display device 54 and a four degree angle change of the mirror element 56 relative to the housing 44 of the rearview display system 40. The four-degree angle change positions the mirror element 56 in a coplanar alignment with the display device 54 in the video mode or the at least one second position shown in Figure 8.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

**Claims**

1. A rearview display system comprising:

a housing;
a display device disposed in the housing, the display device generating an image on a projection surface of the display device;
a mirror element disposed proximate the display device;
a lens disposed proximate the mirror element; and
a tilt mechanism for adjustably positioning the mirror element relative to the display device between a first position and at least one second position, the tilt mechanism including a mounting assembly having at least one arm receiving and engaging the mirror element, a biasing element positioned between the mirror element and the mounting assembly and an adjustment apparatus to adjustably position the mirror element between the first position and the at least one second position relative to the display device,
wherein the adjustment apparatus includes an indexing device, a switch and an actuation member cooperating with the switch, wherein the actuation member engages the mirror element in response to activation of the switch and cooperates with the indexing device to adjustably position the mirror element between the first position and the at least one second position relative to the display device.

2. The rearview display system of claim 1 further comprising a mirror retainer to receive and support the mirror element, the mirror retainer having a first portion extending from the mirror retainer adjacent a central axis of the mirror retainer and a second portion extending from the mirror retainer.

3. The rearview display system of claim 2 wherein the mounting assembly further comprises a first arm engaging the first portion of the mirror retainer and a second arm engaging the second portion of the mirror retainer.

4. The rearview display system of claim 3 wherein the mounting assembly further comprises a first dampening element cooperating with the first arm of the mounting assembly and the first portion of the mirror retainer and a second dampening element cooperating with the second arm of the mounting assembly and the second portion of the mirror retainer to reduce vibrations of the mirror element when supported by the mounting assembly and mirror retainer.

5. The rearview display system of claim 2 wherein the indexing device of the adjustment apparatus further comprises:

a rotatably mounted cam disposed in the indexing device;
a plurality of stops provided in the cam defining an incremental rate of travel for the adjustment positions of the mirror element between the first position and the at least one second position relative to the display device to control the positioning of the mirror element;
a locking member extending from the mirror retainer to releasably engage of the plurality of stops in the cam; and
one or more projections extending from the cam,
wherein the actuation member engages the mirror retainer and one or more of the projections in response to activation of the switch to disengage the locking member from one of the plurality of stops and rotate the cam to adjustably position the mirror element between the first position and the at least one second position relative to the display device.

6. The rearview display system of claim 5 wherein the cam of the indexing device further comprises a first plurality of stops sized to releasably engage the locking member extending from the mirror retainer and a second plurality of stops sized to releasably engage a spring-loaded locking pin.

7. The rearview display system of claim 2 wherein the indexing device of the adjustment apparatus further comprises:

a gear having one or more channels to define an incremental rate of travel of the mirror element between the first position and the at least one second position relative to the display device for the positioning of the mirror element relative to the display device;
a locking pin extending from the mirror retainer; and
a spring-loaded pin cooperating with the gear to position the gear relative to the indexing device,
wherein the one or more channels are sized to releasably engage the locking pin extending from the mirror retainer and adjustably position the mirror element between the first position and the at least one second position relative to the display device.

8. The rearview display system of claim 2 wherein the indexing device of the adjustment apparatus further comprises:

an electric motor; and
a gear box cooperating with the electric motor, wherein the gear box cooperates with and engages the mirror retainer,
wherein the electric motor engages the gear box to adjust the position of the mirror retainer to adjustably position the mirror element between the first position and the at least one second position relative to the display device.

9. The rearview display system of claim 2 wherein the indexing device of the adjustment apparatus further comprises:

a body;
a pair of stops provided in the body; and
a locking member having a spring-loaded projection releasably engaging the pair of stops,
wherein the pair of stops are aligned on the body to adjustably position the mirror element between the first position and the at least one second position relative to the display device.

10. A rearview display system comprising:

a housing;
a display device disposed in the housing, the display device generating an image on a projection surface of the display device;
a mirror element disposed proximate the display device, wherein the mirror element includes a semi-transparent reflective surface;
a mirror retainer to receive and support the mirror element, the mirror retainer having a first portion extending from the mirror retainer adjacent a central axis of the mirror retainer and a second portion extending from the mirror retainer.
a lens disposed proximate the mirror element; and
a tilt mechanism for adjustably positioning the mirror element relative to the display device between a first position and at least one second position, the tilt mechanism including a mounting assembly having at least one arm receiving and engaging the mirror element, a biasing element positioned between the mirror element and the mounting assembly and an adjustment apparatus to adjustably position the mirror element between the first position and the at least one second position relative to the display device,
wherein the adjustment apparatus includes an indexing device, a switch and an actuation member cooperating with the switch, wherein the actuation member engages the mirror retainer in response to activation of the switch and cooperates with the indexing device to adjustably position the mirror element between the first position and the at least one second position relative to the display device.

11. The rearview display system of claim 10 wherein the mounting assembly further comprises:

a first arm engaging the first portion of the mirror retainer and a second arm engaging the second portion of the mirror retainer; and
a first dampening element cooperating with the first arm of the mounting assembly and the first portion of the mirror retainer and a second dampening element cooperating with the second arm of the mounting assembly and the second portion of the mirror retainer to reduce vibrations of the mirror element when supported by the mounting assembly and mirror retainer.

12. The rearview display system of claim 10 wherein the indexing device of the adjustment apparatus further comprises:

a rotatably mounted cam disposed in the indexing device;
a plurality of stops provided in the cam defining an incremental rate of travel for the adjustment positions of the mirror element between the first position and the at least one second position relative to the display device to control the positioning of the mirror element, wherein the plurality of stops includes a first plurality of stops sized to releasably secure the locking member extending from the mirror retainer and a second plurality of stops sized to releasably engage a spring-loaded locking pin;
a locking member extending from the mirror retainer to releasably engage of the plurality of stops in the cam; and
one or more projections extending from the cam,
wherein the actuation member engages the mirror retainer and one or more of the projections in response to activation of the switch to disengage the locking member from one of the plurality of stops and rotate the cam to adjustably position the mirror element between the first position and the at least one second position relative to the display device.

13. The rearview display system of claim 10 wherein the indexing device of the adjustment apparatus further comprises:

a gear having one or more channels to define an incremental rate of travel of the mirror element between the first position and the at least one second position relative to the display device for the positioning of the mirror element relative to the display device;
a locking pin extending from the mirror retainer; and
a spring-loaded pin cooperating with the gear to position the gear relative to the indexing device,
wherein the one or more channels are sized to releasably engage the locking pin extending from the mirror retainer and adjustably position the mirror element between the first position and the at least one second position relative to the display device.

14. The rearview display system of claim 10 wherein the indexing device of the adjustment apparatus further comprises:

an electric motor; and
a gear box cooperating with the electric motor, wherein the gear box cooperates with and engages the mirror retainer,
wherein the electric motor engages the gear box to adjust the position of the mirror retainer to adjustably position the mirror element between the first position and the at least one second position relative to the display device.

15. The rearview display system of claim 10 wherein the indexing device of the adjustment apparatus further comprises:

a body;
a pair of stops provided in the body; and
a locking member having a spring-loaded projection releasably engaging the pair of stops,
wherein the pair of stops are aligned on the body to adjustably position the mirror element between the first position and the at least one second position relative to the display device.

**Fig-1**

PRIOR ART

**Fig-2**

PRIOR ART

_Fig-3_

_Fig-4A_

_Fig-4B_

*Fig-6*

_Fig-5_

_Fig-7_

_Fig-8_

*Fig-9*

*Fig-10*

_Fig-11_

_Fig-12_

Europäisches
Patentamt

European
Patent Office

Office européen
des brevets

## EUROPEAN SEARCH REPORT

**Application Number**

EP 19 15 0045

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/166133 A1 (HALLACK JASON D [US]) 15 June 2017 (2017-06-15) * paragraphs [0031] - [0035], [0043]; figures 5-7 * | 1,10 | INV.<br>B60R1/04<br>B60R1/08<br>B60R1/12 |
| A | US 2004/027695 A1 (LIN WILLIAM [US]) 12 February 2004 (2004-02-12) * paragraphs [0043] - [0045], [0051] - [0053]; figures 2,5 * | 1,10 | |
| A | EP 0 202 757 A2 (BRITAX WINGARD LTD [GB]) 26 November 1986 (1986-11-26) * abstract; figures 1-3 * | 1,5,8, 10,12,14 | |
| A | DE 42 41 543 A1 (KLIK BUEHNENSYSTEME [AT]) 24 June 1993 (1993-06-24) * column 5, line 27 - column 6, line 21; figure 2 * | 1 | |

| TECHNICAL FIELDS SEARCHED (IPC) |
|---|
| B60R |

The present search report has been drawn up for all claims

| Place of search | Date of completion of the search | Examiner |
|---|---|---|
| Berlin | 26 February 2019 | Petersson, Magnus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 0045

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2019

| Patent document cited in search report | | Publication date | Patent family member(s) | | Publication date |
|---|---|---|---|---|---|
| US 2017166133 | A1 | 15-06-2017 | CN | 108367712 A | 03-08-2018 |
| | | | EP | 3390156 A1 | 24-10-2018 |
| | | | JP | 2018537354 A | 20-12-2018 |
| | | | KR | 20180084078 A | 24-07-2018 |
| | | | US | 2017166133 A1 | 15-06-2017 |
| | | | WO | 2017106163 A1 | 22-06-2017 |
| US 2004027695 | A1 | 12-02-2004 | AU | 2003248227 A1 | 23-02-2004 |
| | | | DE | 10393005 T5 | 25-08-2005 |
| | | | GB | 2406841 A | 13-04-2005 |
| | | | JP | 2005534556 A | 17-11-2005 |
| | | | TW | M243653 U | 11-09-2004 |
| | | | US | 2004027694 A1 | 12-02-2004 |
| | | | US | 2004027695 A1 | 12-02-2004 |
| | | | WO | 2004012963 A1 | 12-02-2004 |
| EP 0202757 | A2 | 26-11-1986 | DE | 3664123 D1 | 03-08-1989 |
| | | | EP | 0202757 A2 | 26-11-1986 |
| DE 4241543 | A1 | 24-06-1993 | DE | 4241543 A1 | 24-06-1993 |
| | | | FR | 2685266 A1 | 25-06-1993 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62612896 A